# EUROPEAN PATENT SPECIFICATION

(11) **EP 4 093 209 B1**
(45) Date of publication and mention of the grant of the patent: **06.03.2024**
(21) Application number: 21701952.0
(22) Date of filing: 21.01.2021
(51) Int. Cl.: A23D 7/00, A23D 7/04, C11C 1/00

(54) **AERATED FAT EMULSION**
BELÜFTETE FETTEMULSION
ÉMULSION DE GRAISSE AÉRÉE

(30) Priority: 24.01.2020 EP 20275016
(43) Date of publication of application: 30.11.2022
(73) Proprietor: Bunge Loders Croklaan B.V., 1521 AZ Wormerveer (NL)
(72) Inventor: VERKUIJL, Bastiaan Jeroen Victor, 1521 AZ Wormerveer (NL); MAN, Hang Kam, 1521 AZ Wormerveer (NL)
(74) Representative: Potter Clarkson
(86) International application number: PCT/EP2021/051343
(87) International publication number: WO 2021/148540

(56) References cited:
- EP-A1- 0 667 104
- WO-A1-2013/149816
- WO-A1-2017/055101
- WO-A1-2019/020714
- GB-A- 2 437 239

## Description

This invention relates to an aerated fat emulsion, a method of making the aerated fat emulsion, uses thereof and a confectionery product or a bakery product comprising the aerated fat emulsion.

### Background

Edible aerated oil-in-water emulsions like whipped cream are well known food products comprising a continuous water phase and oil droplets suspended in the aqueous phase.

Fats and oils are important ingredients of food products. Fats and oils are occasionally subjected to an interesterification process which randomly redistributes the fatty acid acyl residues amongst the glyceride molecules. This process can alter the physical properties of the fat or oil.

Lauric oils, such as coconut oil, are vegetable oils comprising predominantly short- and medium chain fatty acid (caprylic acid (C8:0), capric acid (C10:0), lauric acid (C12:0) and myristic acid (C14:0)). Lauric oils are extensively used in the food industries, where the uses include filling cream, ice cream, non-dairy whipped cream, coffee whiteners, cacao butter substitutes and medium chain triglycerides (MCTs).

Sal fat is an edible oil extracted from the seeds of *Shorea robusta.* Shea butter is a fat obtained from the nuts of *Vitellaria paradoxa.* Both fats are relatively rich in stearic acid (C18:0) and oleic acid (C18:1) and can be fractionated to produce a stearin fraction rich in StOSt (1,3-distearoyl-2-oleoyl glyceride) often to be used in a cocoa butter equivalent. WO 2017/055101 A1 discloses a low SAFA fat composition for use in an aerated emulsion, such as a filling cream, wherein the composition comprises less than 35% by weight of SAFA based on the total weight of fatty acid residues.

WO 2013/149816 A1 discloses a method for the production of aerated water-in-oil emulsions containing sucrose fatty acid esters.

GB 2 437 239 A discloses a low fat whipping cream preparation for people suffering from obesity.

EP A1 0 667 104 discloses a low-fat cream which can be produced without the necessity for using a large amount of a specified emulsifier even when the fat content is as low as 40% or less and a fat to be used for producing the cream, where the fat comprises at least 30% of a SUS-type glyceride and 5-60% of a laurin fat.

EP A1 3 466 278 relates to an oil-in-water food emulsion comprising, in weight percent based on the total weight of the emulsion, between 15 and 45% of a fat phase, the fat phase comprising glycerides wherein at least 65% of the chains deriving from fatty acids, in weight percent based on the total of weight of the chains, are chains having 18 carbon atoms; and at least one emulsifier.

WO 2012/052471 A1 provides an edible product containing 15-80 wt% of triglycerides, 20-85 of filler, and at most 15 wt% water, wherein the triglycerides contain as acid residues 20-70 wt% of total SAFA, at most 5 wt% of TFA, thereby C8, C10 and C12 in a weight ratio of (C8+C10+C12)/total SAFA of at least 10% and a weight ratio of (C8+C10)/C12 of at least 5%, whereby the weight ratio D/B is at least 1.5 and the weight ratio of B/total SAFA is at most 0.5, in which D represents the sum of the amounts of all MUFA and PUFA, and B represents the sum of the amounts of C14 and C16, and which triglyceride composition has an SFC at 20°C of at least 5 wt%.

WO 2016/150968 A1 relates to a food composition comprising a lipid-in-water emulsion wherein gas is dispersed in the lipid in the form of a foam.

WO 2019/020714 A1 discloses a non-hydrogenated fat composition comprising greater than 28% by weight stearic acid (C18:0) fatty acid residues; greater than 44% by weight oleic acid (C18:1) fatty acid residues, and less than 10% by weight of palmitic acid (C16) fatty acid residues, based on the total C8-C24 fatty acid residues, and greater than 30% by weight of the combined amounts of StOSt, StStO, StOO and OStO triglycerides based on the total glycerides present in the composition, wherein the weight ratio of (StOSt+StStO)/(StOO + OStO) is from 0.6-1.5.

WO 2019/185444 A1 provides a non-hydrogenated fat composition comprising from 3.2% to 10% by weight of total caprylic acid (C8:0) and capric acid (C10:0); from 13% to 32% by weight lauric acid; and from 20% to 45% by weight stearic acid (C18:0) fatty acid residues; the percentages of acids referring to acids bound as acyl groups in glycerides in the fat composition and being based on the total weight of C8 to C24 fatty acids; and from 7% to 15% by weight CN46 triglycerides; from 4% to 30% by weight CN54 triglycerides; and from 15% to 28% by weight of total CN42 triglycerides and CN44 triglycerides; the percentages of triglycerides referring to the total triglycerides present in the composition.

There remains a need for an aerated fat emulsion which has an improved air incorporation in order to improve the organoleptic properties while the texture of the product is still desirable.

### Description of the invention

According to the present invention, there is provided an aerated fat emulsion comprising from 10% to 90% by weight of water; and from 10% to 90% by weight of a fat composition, wherein the fat composition comprises:
from 75% to 99% by weight of a lauric fat comprising from 35% to 65% lauric acid (C12:0); said percentages of acids referring to acids bound as acyl groups in glycerides in the fat and being based on the total weight of C8 to C24 fatty acids; and
from 1 % to 25% by weight of an interesterified fat comprising from 30% to 70% by weight of total stearic acid (C18:0) and arachidic acid (C20:0); from 1% to 10% by weight of palmitic acid (C16:0) and less than 2% by weight of lauric acid (C12:0), said percentages of acids referring to acids bound as acyl groups in glycerides in the fat and being based on the total weight of C8 to C24 fatty acids; and from 5% to 35% by weight of combined amounts of StStSt and AStSt triglycerides, based on total triglycerides present in the composition, wherein St is stearic acid and A is arachidic acid.

The aerated fat emulsion of this invention has been found to be particularly advantageous when used in confectionery products or bakery products to provide improved aeration which is desirable to obtain the desired organoleptic properties of the products. In particular, the aerated fat emulsion according to the invention also surprisingly maintains good texture properties which allows the products to have a good appearance and to be processable and transportable.

The term "fat emulsion" refers to a mixture of at least a fat phase and an aqueous phase which are immiscible. The fat emulsions for aeration according to the invention are typically oil in water emulsions.

The term "aerated" refers to incorporation of a gas, typically air, into the emulsion.

The term "fat" refers to glyceride fats and oils containing fatty acid acyl groups and does not imply any particular melting point. The term "oil" is used synonymously with "fat".

The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. Percentages of fatty acids in compositions referred to herein include acyl groups in tri-, di- and mono- glycerides present in the glycerides and are based on the total weight of C8 to C24 fatty acids. The fatty acid profile (i.e., composition) may be determined, for example, by fatty acid methyl ester analysis (FAME) using gas chromatography according to ISO 12966-2 and ISO 12966-4.

The fat composition of the aerated fat emulsion according to the invention may be made from naturally occurring or synthetic fats, fractions of naturally occurring or synthetic fats, or mixtures thereof.

Amounts of triglycerides specified herein are percentages by weight based on total triglycerides present in the fat composition. The notation triglyceride XYZ denotes triglycerides having fatty acid acyl groups X, Y and Z at any of the 1-, 2- and 3- positions of the glyceride. The notation A2B includes both AAB and ABA, and AB2 includes both ABB and BAB. Triglyceride content may be determined for example by GC (ISO 23275).

The term "lauric fat" refers to a fat containing mainly lauric acid (C12:0), typically derived from sources such as coconut oil or palm kernel oil.

The term "interesterified fat" refers to a fat subjected to a random non-specific redistribution of the fatty acid moieties present in a triglyceride oil over its glycerol moieties.

The aerated fat emulsion according to the invention preferably has an overrun from 100% to 400%, more preferably from 150% to 300% and even more preferably from 200% to 300%.

The term "overrun" refers to the percentage increase in volume that occurred as a result of the gas incorporation. The overrun is calculated as follows: (density in glml of unwhipped cream / density in g/ml of whipped cream) * 100%.

The aerated fat emulsion according to the invention preferably comprises from 20% to 80% by weight of water and from 10% to 70% by weight of the fat composition. More preferably, the aerated fat emulsion according to the invention comprises from 30% to 70% by weight of water and from 15% to 65% by weight of the fat composition. Even more preferably, the aerated fat emulsion according to the invention comprises 35% to 65% by weight of water and from 20% to 55% by weight of the fat composition. Most preferably, the aerated fat emulsion according to the invention comprises from 40% to 55% by weight of water and from 25% to 50% by weight of the fat composition.

The fat composition of the aerated fat emulsion according to the invention comprises from 75% to 99% by weight of a lauric fat, preferably from 80% to 99% by weight, more preferably from 85% to 99% by weight and even more preferably from 90% to 99% by weight.

The lauric fat of the fat composition of the aerated fat emulsion according to the invention comprises from 35% to 65% by weight of lauric acid; said percentage referring to acid bound as acyl groups in glycerides in the fat and being based on the total weight of C8 to C24 fatty acids, preferably from 40% to 60% by weight, more preferably from 42% to 58% and even more preferably from 43% to 55% by weight.

The lauric fat of the fat composition of the aerated fat emulsion according to the invention is preferably selected from coconut oil, palm kernel oil, fully hydrogenated coconut oil, fully hydrogenated palm kernel oil, fractions thereof and mixtures thereof. More preferably, the lauric fat of the fat composition of the aerated fat emulsion according to the invention consists of coconut oil.

The fat composition of the aerated fat emulsion according to the invention comprises from 1% to 25% by weight of the interesterified fat, preferably from 1% to 20% by weight, more preferably from 1% to 15% by weight and even more preferably from 1% to 10% by weight.

The interesterified fat of the fat composition of the aerated fat emulsion according to the invention comprises from 30% to 70% by weight of total stearic acid (C18:0) and arachidic acid (C20:0); from 1% to 10% by weight of palmitic acid (C16:0) and less than 2% by weight of lauric acid (C12:0); said percentage of acids referring to acids bound as acyl groups in glycerides in the fat and being based on the total weight of C8 to C24 fatty acids. Preferably, the interesterified fat of the fat composition of the aerated fat emulsion according to the invention comprises from 35% to 68% by weight of total stearic acid (C18:0) and arachidic acid (C20:0); from 1% to 9% by weight of palmitic acid (C16:0) and from 0.0% to 1.5% by weight of lauric acid (C12:0); said percentage of acids referring to acids bound as acyl groups in glycerides in the fat and being based on the total weight of C8 to C24 fatty acids. More preferably, the interesterified fat of the fat composition of the aerated fat emulsion according to the invention comprises from 40% to 65% by weight of total stearic acid (C18:0) and arachidic acid (C20:0); from 1% to 8% by weight of palmitic acid (C16:0) and from 0.1% to 1.0% by weight of lauric acid (C12:0); said percentage of acids referring to acids bound as acyl groups in glycerides and being based on the total weight of C8 to C24 fatty acids.

The interesterified fat of the fat composition of the aerated fat emulsion according to the invention comprises from 5% to 35% by weight of the combined amounts of StStSt and AStSt triglycerides, based on total triglycerides present in the composition, wherein St is stearic acid and A is arachidic acid, preferably from 7% to 30% by weight, more preferably from 8% to 28% by weight and even more preferably from 9% to 26%.

in a preferred embodiment, the aerated fat emulsion comprises: from 20% to 80% by weight of water; and from 10% to 70% by weight of a fat composition, wherein the fat composition comprises: from 80% to 99% by weight of a lauric fat comprising from 40% to 60% lauric acid (C12:0); said percentages of acids referring to acids bound as acyl groups in glycerides in the fat and being based on the total weight of C8 to C24 fatty acids; and from 1% to 20% by weight of an interesterified fat comprising from 35% to 68% by weight of total stearic acid (C18:0) and arachidic acid (C20:0); from 1% to 9% by weight of palmitic acid (C16:0) and from 0.0% to 1.5% by weight of lauric acid (C12:0); and from 7% to 30% by weight of the combined amounts of StStSt and AStSt triglycerides, based on total triglycerides present in the composition, wherein St is stearic acid and A is arachidic acid.

In a more preferred embodiment, the aerated fat emulsion comprises: from 30% to 70% by weight of water; and from 15% to 65% by weight of a fat composition, wherein the fat composition comprises: from 85% to 99% by weight of a lauric fat comprising from 42% to 58% lauric acid (C12:0); said percentages of acids referring to acids bound as acyl groups in glycerides in the fat and being based on the total weight of C8 to C24 fatty acids; and from 1% to 15% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 8% to 28% by weight of the combined amounts of StStSt and AStSt triglycerides, based on total triglycerides present in the composition, wherein St is stearic acid and A is arachidic acid.

In an even more preferred embodiment, the aerated fat emulsion comprises: from 35% to 65% by weight of water; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides, based on total triglycerides present in the composition, wherein St is stearic acid and A is arachidic acid.

The interesterified fat of the fat composition of the aerated fat emulsion according to the invention preferably has a weight ratio of StOSt:StOO less than 2.5, more preferably from 0.5 to 2.3, wherein St is stearic acid and O is oleic acid.

The interesterified fat of the fat composition of the aerated fat emulsion according to the invention preferably has from 45.0 to 68.0 solid fat content at 10°C, more preferably from 48.0 to 67.5; measured on unstabilized fat according to ISO 8292-1.

The interesterified fat of the fat composition of the aerated fat emulsion according to the invention preferably has from 15.0 to 70.0 solid fat content at 25°C, more preferably from 20.0 to 65.0; measured on unstabilized fat according to ISO 8292-1.

The interesterified fat of the fat composition of the aerated fat emulsion according to the invention preferably has from 15.0 to 59.0 solid fat content at 30°C, more preferably from 20.0 to 55.0; measured on unstabilized fat according to ISO 8292-1.

The interesterified fat of the fat composition of the aerated fat emulsion according to the invention preferably has from 10.0 to 55.0 solid fat content at 35°C, more preferably from 15.0 to 50.0; measured on unstabilized fat according to ISO 8292-1.

The interesterified fat of the fat composition of the aerated fat emulsion according to the invention preferably has from 5.0 to 45.0 solid fat content at 40°C, more preferably from 10.0 to 40.0; measured on unstabilized fat according to ISO 8292-1.

In a preferred embodiment, the aerated fat emulsion comprises: from 30% to 70% by weight of water; and from 15% to 65% by weight of a fat composition, wherein the fat composition comprises: from 85% to 99% by weight of a lauric fat comprising from 42% to 58% lauric acid (C12:0); said percentages of acids referring to acids bound as acyl groups in glycerides in the fat and being based on the total weight of C8 to C24 fatty acids; and from 1% to 15% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 8% to 28% by weight of the combined amounts of StStSt and AStSt triglycerides and a weight ratio of StOSt:StOO less than 2.5, based on total triglycerides present in the composition, wherein St is stearic acid, A is arachidic acid and O is oleic acid.

In a more preferred embodiment, the aerated fat emulsion comprises: from 35% to 65% by weight of water; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides and a weight ratio of StOSt:StOO from 0.5 to 2.3, based on total triglycerides present in the composition, wherein St is stearic acid, A is arachidic acid and O is oleic acid.

In an even more preferred embodiment, the aerated fat emulsion comprises: from 30% to 70% by weight of water; and from 15% to 65% by weight of a fat composition, wherein the fat composition comprises: from 85% to 99% by weight of a lauric fat comprising from 42% to 58% lauric acid (C12:0); said percentages of acids referring to acids bound as acyl groups in glycerides in the fat and being based on the total weight of C8 to C24 fatty acids; and from 1% to 15% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 8% to 28% by weight of the combined amounts of StStSt and AStSt triglycerides and a weight ratio of StOSt:StOO less than 2.5, based on total triglycerides present in the composition, wherein St is stearic acid, A is arachidic acid and O is oleic acid; and from 45.0 to 68.0 solid fat content at 10°C; and from 15.0 to 70.0 solid fat content at 25°C; and from 15.0 to 59.0 solid fat content at 30°C; and from 10.0 to 55.0 solid fat content at 35°C; and from 5.0 to 45.0 solid fat content at 40°C; measured on unstabilized fat according to ISO 8292-1.

In a most preferred embodiment, the aerated fat emulsion comprises: from 35% to 65% by weight of water; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides and a weight ratio of StOSt:StOO from 0.5 to 2.3, based on total triglycerides present in the composition, wherein St is stearic acid, A is arachidic acid and O is oleic acid; and from 48.0 to 67.5 solid fat content at 10°C; and from 20.0 to 65.0 solid fat content at 25°C; and from 20.0 to 55.0 solid fat content at 30°C; and from 15.0 to 50.0 solid fat content at 35°C; and from 10.0 to 40.0 solid fat content at 40°C; measured on unstabilized fat according to ISO 8292-1.

The interesterified fat of the fat composition of the aerated fat emulsion according to the invention is preferably selected from interesterified shea butter, interesterified shea stearin, interesterified sal butter, interesterified sal stearin, interesterified kokum butter, interesterified kokum butter stearin, interesterified cocoa butter, interesterified cocoa butter stearin and mixtures thereof. More preferably, the interesterified fat of the fat composition of the aerated fat emulsion according to the invention is selected from interesterified sal butter, interesterified shea stearin and mixtures thereof.

The aerated fat emulsion according to the invention preferably comprises from 35% to 65% by weight of water; from 20% to 55% by weight of the fat composition; and from 5% to 25% by weight of sugar. More preferably, the aerated fat emulsion according to the invention comprises from 40% to 55% by weight of water; from 25% to 50% by weight of the fat composition; and from 10% to 20% by weight of sugar.

The aerated fat emulsion according to the invention preferably further comprises from 0.5% to 2% by weight of sodium caseinate, more preferably from 0.8% to 1.2% by weight. Accordingly, the aerated fat emulsion according to the invention preferably comprises from 40% to 55% by weight of water; from 25% to 50% by weight of the fat composition; from 10% to 20% by weight of sugar; and 0.8% to 1.2% by weight of sodium caseinate.

Accordingly, in a preferred embodiment, the aerated fat emulsion comprises: from 35% to 65% by weight of water; from 5% to 25% by weight of sugar; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides and a weight ratio of StOSt:StOO from 0.5 to 2.3, based on total triglycerides present in the composition, wherein St is stearic acid, A is arachidic acid and O is oleic acid; and from 48.0 to 67.5 solid fat content at 10°C; and from 20.0 to 65.0 solid fat content at 25°C; and from 20.0 to 55.0 solid fat content at 30°C; and from 15.0 to 50.0 solid fat content at 35°C; and from 10.0 to 40.0 solid fat content at 40°C; measured on unstabilized fat according to ISO 8292-1.

The aerated fat emulsion according to the invention is preferably whipped cream.

Accordingly, in a preferred embodiment, the whipped cream comprises: from 35% to 65% by weight of water; from 5% to 25% by weight of sugar; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides and a weight ratio of StOSt:StOO from 0.5 to 2.3, based on total triglycerides present in the composition, wherein St is stearic acid, A is arachidic acid and O is oleic acid; and from 48.0 to 67.5 solid fat content at 10°C; and from 20.0 to 65.0 solid fat content at 25°C; and from 20.0 to 55.0 solid fat content at 30°C; and from 15.0 to 50.0 solid fat content at 35°C; and from 10.0 to 40.0 solid fat content at 40°C; measured on unstabilized fat according to ISO 8292-1.

The invention also relates to a method of making an aerated fat emulsion comprising the steps of: a) providing a mixture comprising from 10% to 90% by weight of water and from 10% to 90% by weight of a fat composition, wherein the fat composition comprises: from 75% to 99% by weight of a lauric fat comprising from 35% to 65% lauric acid (C12:0); and from 1% to 25% by weight of an interesterified fat comprising from 30% to 70% by weight of total stearic acid (C18:0) and arachidic acid (C20:0); from 1% to 10% by weight of palmitic acid (C16:0) and less than 2% by weight of lauric acid (C12:0); said percentages of acids referring to acids bound as acyl groups in glycerides in the fat and being based on the total weight of C8 to C24 fatty acids; and from 5% to 35% by weight of the combined amounts of StStSt and AStSt triglycerides, based on total triglycerides present in the composition, wherein St is stearic acid and A is arachidic acid; b) pasteurizing and homogenizing the mixture obtained in step a); c) stabilizing the pasteurized and homogenized mixture obtained in step b), preferably for at least 6 hours at from 3°C to 7°C; and d) aerating the stabilized mixture obtained in step c).

Preferably, the aerated fat emulsion produced in the method of the invention is an aerated fat emulsion according to the invention.

In a preferred embodiment, a method of making an aerated fat emulsion comprising the step of: a) providing a mixture comprising from 35% to 65% by weight of water; from 5% to 25% by weight of sugar; and from 20% to 55% by weight of a fat composition, wherein the fat composition comprises: from 90% to 99% by weight of a lauric fat comprising from 43% to 55% lauric acid (C12:0); said percentages of acids referring to acids bound as acyl groups in glycerides in the fat and being based on the total weight of C8 to C24 fatty acids; and from 1% to 10% by weight of an interesterified fat comprising from 40% to 65% by weight of total stearic acid (C18:0) and arachidic acid (C20:0); from 1% to 8% by weight of palmitic acid (C16:0) and from 0.1% to 1.0% by weight of lauric acid (C12:0); and from 9% to 26% by weight of the combined amounts of StStSt and AStSt triglycerides and a weight ratio of StOSt:StOO from 0.5 to 2.3, based on total triglycerides present in the composition, wherein St is stearic acid, A is arachidic acid and O is oleic acid; and from 48.0 to 67.5 solid fat content at 10°C; and from 20.0 to 65.0 solid fat content at 25°C; and from 20.0 to 55.0 solid fat content at 30°C; and from 15.0 to 50.0 solid fat content at 35°C; and from 10.0 to 40.0 solid fat content at 40°C; measured on unstabilized fat according to ISO 8292-1; b) pasteurizing and homogenizing the mixture obtained in step a); c) stabilizing the pasteurized and homogenized mixture obtained in step b) for from 6 to 12 hours at from 3°C to 7°C; and d) aerating the stabilized mixture obtained in step c).

In step c) of the method according to the invention, the homogenizing is preferably performed in one single stage. The pressure during the homogenizing is preferably at least 100 bar, more preferably from 30 bar to 100 bar and even more preferably from 50 bar to 80 bar.

In step d) of the method according to the invention, the aerating is preferably performed for at least 1 minute, more preferably from 3 minutes to 7 minutes. Suitable apparatus for aerating, such as a mixer, is well known.

The invention also relates to the use of an aerated fat emulsion according to the invention in a confectionery product, or a bakery product.

The invention also relates to a confectionery product, or a bakery product comprising an aerated fat emulsion according to the invention.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention.

The following non-limiting examples illustrate the invention and do not limit its scope in any way. In the examples and throughout this specification, all percentages, parts and ratios are by weight unless indicated otherwise.

### Examples

### Example 1

Sal butter is chemically interesterified by using sodium methoxide as catalyst. After chemical interesterification, the interesterified sal is physically refined.

Shea butter is fractionated by using solvent to produce shea stearin. Shea stearin is then chemically interesterified by using sodium methoxide as catalyst. After chemical interesterification, the interesterified shea stearin is physically refined.

The analytical results of interesterified sal butter, interesterified shea stearin, sal butter and shea stearin are shown in Table 1.

**Table 1: Fat composition of interesterified sal butter, interesterified shea stearin, sal butter and shea stearin**

| | Interesterified sal butter | Sal butter | Interesterified shea stearin | Shea stearin |
|---|---|---|---|---|
| IV FAME | 40.5 | 38.8 | 32.5 | 32.3 |
| SAFA | 55.9 | 57.2 | 65.1 | 65.5 |
| MUFA | 41.2 | 40.7 | 32.0 | 31.6 |
| PUFA | 2.8 | 2.0 | 2.9 | 2.9 |
| TRANS | 0.5 | 0.5 | 0.1 | 0.1 |
| C12:0 | 0.3 | 0.0 | 0.2 | 0.1 |
| C14:0 | 0.2 | 0.0 | 0.1 | 0.1 |
| C16:0 | 6.9 | 5.8 | 3.4 | 4.0 |
| C18:0 | 41.1 | 43.4 | 59.3 | 59.3 |
| C18:1 | 40.9 | 40.4 | 31.9 | 31.5 |
| C18:2 | 2.3 | 1.6 | 2.8 | 2.9 |
| C18:3 | 0.4 | 0.3 | 0.1 | 0.1 |
| C20:0 | 6.5 | 7.0 | 1.7 | 1.7 |
| C20:1 | 0.3 | 0.3 | 0.1 | 0.0 |
| C20:2 | 0.1 | 0.1 | 0.0 | 0.0 |
| C22:0 | 0.5 | 0.5 | 0.2 | 0.1 |
| C24:0 | 0.2 | 0.2 | 0.1 | 0.1 |
| C18:0+C20:0 | 47.6 | 50.4 | 61 | 61 |
| CN46 | 0.3 | 0.1 | 0.1 | 0.1 |
| CN48 | 1.1 | 0.2 | 0.8 | 0.4 |
| CN50 | 3.0 | 1.6 | 0.7 | 1.7 |
| CN52 | 15.6 | 15.2 | 10.2 | 8.9 |
| CN54 | 65.3 | 66.0 | 83.9 | 84.3 |
| CN56 | 14.8 | 16.7 | 4.4 | 4.5 |
| PPP | 0.6 | 0.0 | 0.2 | 0.0 |
| MOP | 0.5 | 0.0 | 0.3 | 0.0 |
| MLP | 0.3 | 0.0 | 0.1 | 0.0 |
| PPSt | 0.7 | 0.6 | 0.4 | 0.1 |
| POP | 1.5 | 1.0 | 0.0 | 1.3 |
| PLP | 0.4 | 0.1 | 0.0 | 0.3 |
| PStSt | 4.0 | 0.4 | 4.3 | 0.4 |
| POSt | 7.0 | 12.1 | 3.9 | 6.6 |
| POO | 4.4 | 3.3 | 1.2 | 0.6 |
| PLSt | 0.3 | 0.4 | 0.3 | 0.5 |
| PLO | 0.6 | 0.2 | 0.2 | 0.2 |
| PLL | 0.2 | 0.1 | 0.0 | 0.0 |
| StStSt | 9.3 | 0.6 | 21.8 | 2.1 |
| StOSt | 26.5 | 47.5 | 36.9 | 73.7 |
| StOO | 21.8 | 16.4 | 18.1 | 3.6 |
| StLSt | 0.8 | 0.9 | 2.1 | 5.4 |
| OOO | 7.1 | 2.7 | 3.0 | 0.4 |
| StLO | 1.4 | 0.7 | 2.7 | 0.4 |
| OLO | 0.9 | 0.3 | 0.6 | 0.1 |
| StLL | 0.0 | 0.1 | 0.0 | 0.0 |
| AStSt | 3.0 | 0.0 | 1.4 | 0.1 |
| AOSt | 5.7 | 9.1 | 1.5 | 3.3 |
| AOO | 2.9 | 2.6 | 0.4 | 0.2 |
| ALSt | 0.1 | 0.3 | 0.0 | 0.2 |
| StStSt+AStSt | 12.3 | 0.6 | 23.8 | 2.2 |
| StOSt/StOO | 1.2 | 2.9 | 2.0 | 20.5 |
| N5 | 56.8 | 71.1 | 71.0 | 89.7 |
| N10 | 51.0 | 68.6 | 67.0 | 90.9 |
| N15 | 42.5 | 59.6 | 61.4 | 88.0 |
| N20 | 37.9 | 41.0 | 61.6 | 80.6 |
| N25 | 30.0 | 6.1 | 61.2 | 73.4 |
| N30 | 28.2 | 1.6 | 53.2 | 60.0 |
| N35 | 21.4 | 0.5 | 40.7 | 6.1 |
| N40 | 16.1 | 0.0 | 33.7 | 2.6 |

### In the above table:

Cx:y refers to a fatty acid having x carbon atoms and y double bonds; levels determined by GC-FAME (ISO 12966-2 and ISO 12966-4)
SAFA refers to saturated fatty acids;
MUFA refers to mono-unsaturated fatty acids;
PUFA refers to poly-unsaturated fatty acids;
IV FAME refers to calculated iodine value according to AOCS Cd 1c-85;
TRANS refers to trans fatty acids: unsaturated fatty acids having a double bond in a trans arrangement;
CNxx refers to a triglyceride having xx carbon atoms (excluding the carbon atoms from the glycerol, as is standard practice); levels determined by GC with pretreatment to remove the diglycerides eventually (AOCS Ce 5-86);
O, P, St, L and A refer to oleic, palmitic, stearic, linoleic and arachidic acids, respectively; Triglyceride compositions: POSt, and other triglycerides were determined by GC (ISO 23275), wherein each GC peak includes triglycerides having the same fatty acids in different positions e.g., POSt is in the same signal peak as PStO and StPO; and
Nx refers to solid fat content determined by NMR on unstabilized fat measured at x°C according to ISO 8292-1.

### Example 2

The whipped cream is produced following the recipe as shown in Table 2.

**Table 2: Ingredient list of whipped cream**

| ingredients | Weight percentage % |
|---|---|
| Vegetable Fat | 34.0 |
| Sherex (E472b and E471) | 1.0 |
| Water | 48.0 |
| Lactose | 2.7 |
| Sugar | 12.0 |
| Sodium Caseinate | 1.0 |
| Sorbitol | 1.0 |
| Creamwhip414 (ME, CMC, Carr, Guar) | 0.3 |

Creamwhip414 is a blend of stabilizers, being microcrystalline cellulose E460(i), Cellulose gum E466, Carrageenan E407 and Guar E412. This is used to improve the stabilization of the whipped cream, to avoid draining from the foam and hence enhance the storage stability.

The whipped cream is made according to the following steps. The fat is completely melted and the emulsifier is added in the fat to form the fat phase. The other powdered ingredients are dissolved into lukewarm water. This water phase is heated to above 60°C. The fat phase is added into the water phase, pasteurized and homogenized (single stage homogenization at 70 bar). The cream is stabilized during one night for at least 8 hours at 5°C. The cream is whipped in the Hobart and the overrun and texture are measured.

The overrun is calculated as follows: (density in g/ml of unwhipped cream / density in g/ml of whipped cream) * 100%.

The texture is measured by use of the Brookfield TexturePro CT 3-4500, Probe TA5, flat probe 38mm with speed 0.5 mm/s and 5 mm depth. The value (g) is a measure for the force necessary to attain a given deformation.

### Example 3

Two fat compositions Fat A and Fat B are produced by blending coconut oil and interesterified sal butter. Fat A consists of 98% by weight coconut oil and 2% by weight interesterified sal butter. Fat B consists of 96% by weight coconut oil and 4% by weight interesterified sal butter. Additionally, fully hydrogenated palm kernel oil is used as a reference fat (Reference Fat C). 100% coconut oil is also used as a reference fat (Reference Fat D). Further, a comparative fat composition is made by 70% by weight coconut oil and 30% by weight interesterified sal butter (Comparative Fat E).

The analytical results of coconut oil and fully hydrogenated palm kernel are shown in Table 3.

**Table 3: Fat composition of coconut oil and fully hydrogenated palm kernel oil**

| | Coconut oil | Fully hydrogenated palm kernel oil |
|---|---|---|
| TRANS | 0 | 0 |
| C8:0 | 6.0 | 3.2 |
| C10:0 | 5.3 | 3.3 |
| C12:0 | 46.5 | 48.2 |
| C14:0 | 19.5 | 16.3 |
| C16:0 | 10.4 | 8.5 |
| C18:0 | 3.1 | 20.1 |
| C18:1 | 7.3 | 0 |
| C18:2 | 1.8 | 0 |
| C18:3 | 0 | 0 |
| C20:0 | 0.1 | 0.2 |
| CN28 | 0.6 | 0.1 |
| CN30 | 2.7 | 1.0 |
| CN32 | 11.5 | 5.3 |
| CN34 | 15.9 | 8.2 |
| CN36 | 18.8 | 20.9 |
| CN38 | 17.2 | 16.5 |
| CN40 | 11.3 | 10.1 |
| CN42 | 8.2 | 9.4 |
| CN44 | 4.8 | 6.8 |
| CN46 | 2.7 | 5.6 |
| CN48 | 2.4 | 6.3 |
| CN50 | 1.9 | 3.2 |
| CN52 | 1.3 | 3.0 |
| CN54 | 0.8 | 2.9 |
| CN56 | 0 | 0.1 |

Fat A, Fat B, Reference Fat C, Reference Fat D and Comparative Fat E are used to produce whipped cream according to Example 2. The whipping time is 5 minutes. The results of overrun and texture are shown in Table 4.

**Table 4: Analysis of overrun and texture of whipped creams by using Fat A, Fat B, Reference Fat C, Reference Fat D and Comparative Fat E**

| Vegetable fat | Overrun % | Texture |
|---|---|---|
| Fat A | 222 | 271 |
| Fat B | 207 | 404 |
| Reference Fat C | 272 | 100 |
| Reference Fat D | 185 | 200 |
| Comparative Fat E | 259 | 57 |

The results show that the whipped creams made by using Fat A and Fat B not only have the higher overrun thus better air incorporation compared to Reference Fat D but also have better texture properties compared to Reference Fat C and Comparative Fat E. It is considered that the texture is not acceptable when the texture value is lower than 150.

Rosettes are also made with the whipped cream. The piping of the whipped cream is evaluated and the shape of rosette is visually evaluated. The results are shown in Table 5.

**Table 5: Rosette evaluation of whipped creams by using Fat A, Fat B, Reference Fat C, Reference Fat D and Comparative Fat E**

| Vegetable fat | Piping during the production of the rosettes | Shape of the rosettes |
|---|---|---|
| Fat A | Convenient | Firm |
| Fat B | Pressured | Stiff |
| Reference Fat C | Runny (too liquid) | Weak |
| Reference Fat D | Convenient | Weak |
| Comparative Fat E | Fast (too liquid) | Weak |

The results show that the process to produce rosettes by whipped creams using Fat A and Fat B is particularly convenient and desirable. Also, the rosettes produced by whipped creams using Fat A and Fat B have a firm and stiff texture which is particularly desired.

### Example 4

A fat composition Fat F is produced by blending coconut oil and interesterified sal butter. Fat F consists of 94% by weight coconut oil and 6% by weight interesterified sal butter. A comparative fat composition is made by blending 94% by weight coconut oil and 6% by weight sal butter (Comparative Fat G).

Fat F and Comparative Fat G are used to produce whipped cream according to Example 2. The whipping time is 5 minutes. The results of overrun and texture are shown in Table 6.

**Table 6: Analysis of overrun and texture of whipped creams by using Fat F and Comparative Fat G**

| Vegetable fat | Overrun % | Texture |
|---|---|---|
| Fat F | 226 | 378 |
| Comparative Fat G | 212 | 344 |

The results show that the whipped cream made by using Fat F has a higher overrun and thus better air incorporation compared to Comparative Fat G.

### Example 5

A fat composition Fat H is produced by blending coconut oil and interesterified shea stearin. Fat H consists of 96% by weight coconut oil and 4% by weight interesterified shea stearin. A comparative fat composition is made by 96% by weight coconut oil and 4% by weight shea stearin (Comparative Fat I).

Fat H and Comparative Fat I are used to produce whipped cream according to Example 2. The whipping time is 5 minutes. The results of overrun and texture are shown in Table 7.

**Table 7: Analysis of overrun and texture of whipped creams by using Fat H and Comparative Fat I**

| Vegetable fat | Overrun % | Texture |
|---|---|---|
| Fat H | 292 | 184 |
| Comparative Fat I | 213 | 335 |

The results show that the whipped cream made by using Fat H has a higher overrun and thus better air incorporation compared to Comparative Fat I.

## Claims

1. An aerated fat emulsion comprising:
- from 10% to 90% by weight of water; and
- from 10% to 90% by weight of a fat composition, wherein the fat composition comprises:
from 75% to 99% by weight of a lauric fat comprising from 35% to 65% by weight of lauric acid (C12:0), said percentage referring to lauric acid bound as acyl groups in glycerides in the fat and being based on the total weight of C8 to C24 fatty acids; and
from 1% to 25% by weight of an interesterified fat comprising from 30% to 70% by weight of total stearic acid (C18:0) and arachidic acid (C20:0); from 1% to 10% by weight of palmitic acid (C16:0) and less than 2% by weight of lauric acid (C12:0); said percentages of acids referring to acids bound as acyl groups in glycerides in the fat and being based on the total weight of C8 to C24 fatty acids; and from 5% to 35% by weight of the combined amounts of StStSt and AStSt triglycerides based on total triglycerides present in the composition, wherein St is stearic acid and A is arachidic acid.

2. An aerated fat emulsion according to claim 1, having an overrun from 100% to 400%, preferably from 150% to 300%.

3. Aerated fat emulsion according to claim 1 or claim 2, comprising:
from 20% to 80% by weight of water, preferably from 30% to 70% by weight; and
from 10% to 70% by weight of the fat composition, preferably from 15% to 65% by weight.

4. Aerated fat emulsion according to any of the preceding claims, wherein the fat composition comprises from 80% to 99% by weight of the lauric fat, preferably from 85% to 99% by weight and more preferably from 90% to 99% by weight.

5. Aerated fat emulsion according to any of the preceding claims, wherein the lauric fat of the fat composition comprises from 40% to 60% by weight of lauric acid (C12:0), preferably from 42% to 58% by weight.

6. Aerated fat emulsion according to any of the preceding claims, wherein the lauric fat of the fat composition is selected from coconut oil, palm kernel oil, fully hydrogenated coconut oil, fully hydrogenated palm kernel oil, fractions thereof and mixtures thereof, and wherein preferably the lauric fat consists of coconut oil.

7. Aerated fat emulsion according to any of the preceding claims, wherein the fat composition comprises from 1% to 20% by weight of the interesterified fat, preferably from 1% to 15% by weight.

8. Aerated fat emulsion according to any of the preceding claims, wherein the interesterified fat of the fat composition comprises from 35% to 68% by weight of total stearic acid (C18:0) and arachidic acid (C20:0), preferably from 40% to 65%; from 1% to 9% by weight of palmitic acid (C16:0), preferably from 1% to 8%; and from 0.0% to 1.5% by weight of lauric acid (C12:0), preferably from 0.1% to 1.0%.

9. Aerated fat emulsion according to any of the preceding claims, wherein the interesterified fat of the fat composition comprises from 7% to 30% by weight of the combined amounts of StStSt and AStSt triglycerides based on total triglycerides present in the composition, wherein St is stearic acid and A is arachidic acid, preferably from 8% to 28% by weight.

10. Aerated fat emulsion according to any of the preceding claims, wherein the interesterified fat of the fat composition has a weight ratio of StOStStOO less than 2.5, preferably from 0.5 to 2.3, wherein St is stearic acid and O is oleic acid.

11. Aerated fat emulsion according to any of the preceding claims, wherein the interesterified fat of the fat composition has:
from 45.0 to 68.0 solid fat content at 10°C, preferably from 48.0 to 67.5; and/or
from 15.0 to 70.0 solid fat content at 25°C, preferably from 20.0 to 65.0; and/or
from 15.0 to 59.0 solid fat content at 30°C, preferably from 20.0 to 55.0; and/or
from 10.0 to 55.0 solid fat content at 35°C, preferably from 15.0 to 50.0; and/or
from 5.0 to 45.0 solid fat content at 40°C, preferably from 10.0 to 40.0;
measured on unstabilized fat according to ISO 8292-1.

12. Aerated fat emulsion according to any of the preceding claims, wherein the interesterified fat of the fat composition is selected from interesterified shea butter, interesterified shea stearin, interesterified sal butter, interesterified sal stearin, interesterified kokum butter, interesterified kokum butter stearin, interesterified cocoa butter, interesterified cocoa butter stearin and mixtures thereof, preferably interesterified sal butter, interesterified shea stearin and mixtures thereof.

13. Aerated fat emulsion according to any of the preceding claims, comprising:
from 35% to 65% by weight of water, preferably from 40% to 55% by weight;
from 20% to 55% by weight of the fat composition, preferably from 25% to 50% by weight;
and
from 5% to 25% by weight of sugar, preferably from 10% to 20% by weight.

14. Aerated fat emulsion according to any of the preceding claims, which is whipped cream.

15. A method of making an aerated fat emulsion comprising the steps of:
a) providing a mixture comprising from 10% to 90% by weight of water and from 10% to 90% by weight of a fat composition, wherein the fat composition comprises: from 75% to 99% by weight of a lauric fat comprising from 35% to 65% lauric acid (C12:0); and from 1% to 25% by weight of an interesterified fat comprising from 30% to 70% by weight of total stearic acid (C18:0) and arachidic acid (C20:0); from 1% to 10% by weight of palmitic acid (C16:0) and less than 2% by weight of lauric acid (C12:0); said percentages of acids referring to acids bound as acyl groups in glycerides in the fat and being based on the total weight of C8 to C24 fatty acids; and from 5% to 35% by weight of the combined amounts of StStSt and AStSt triglycerides, based on total triglycerides present in the composition, wherein St is stearic acid and A is arachidic acid;
b) pasteurizing and homogenizing the mixture obtained in step a);
c) stabilizing the pasteurized and homogenized mixture obtained in step b) preferably for at least 6 hours at from 3°C to 7°C, more preferably for from 8 to 24 hours; and
d) aerating the stabilized mixture obtained in step c).

16. Use of an aerated fat emulsion of any one of Claims 1 to 14 in a confectionery product or bakery product.

17. Confectionery product or bakery product comprising an aerated fat emulsion of any one of Claims 1 to 14.

## Patentansprüche

1. Belüftete Fettemulsion, umfassend:
- 10 bis 90 Gewichtsprozent Wasser; Und
- 10 bis 90 Gew.-% einer Fettzusammensetzung, wobei die Fettzusammensetzung Folgendes umfasst:
75 bis 99 Gew.-% eines Laurinfetts, umfassend 35 bis 65 Gew.-% Laurinsäure (C12:0), wobei sich dieser Prozentsatz auf die als Acylgruppen in Glyceriden im Fett gebundene Laurinsäure bezieht und auf dem Gesamtgewicht der C8- bis C24-Fettsäuren basiert; und
1 bis 25 Gew.-% eines umgeesterten Fetts, umfassend 30 bis 70 Gew.-% Gesamtstearinsäure (C18:0) und Arachinsäure (C20:0); 1 bis 10 Gew.-% Palmitinsäure (C16:0) und weniger als 2 Gew.-% Laurinsäure (C12:0); wobei sich die Prozentsätze der Säuren auf Säuren beziehen, die als Acylgruppen in Glyceriden im Fett gebunden sind, und auf dem Gesamtgewicht der C8- bis C24-Fettsäuren basieren; und 5 bis 35 Gew.-% der kombinierten Mengen an StStSt- und AStSt-Triglyceriden, basierend auf den gesamten in der Zusammensetzung vorhandenen Triglyceriden, wobei St Stearinsäure und A Arachinsäure ist.

2. Belüftete Fettemulsion nach Anspruch 1 mit einem Überlauf von 100 % bis 400 %, vorzugsweise von 150 % bis 300 %.

3. Belüftete Fettemulsion nach Anspruch 1 oder Anspruch 2, umfassend:
20 bis 80 Gew.-%, vorzugsweise 30 bis 70 Gew.-% Wasser; und
10 bis 70 Gew.-%, vorzugsweise 15 bis 65 Gew.-% der Fettzusammensetzung.

4. Belüftete Fettemulsion nach einem der vorhergehenden Ansprüche, wobei die Fettzusammensetzung 80 bis 99 Gew.-%, vorzugsweise 85 bis 99 Gew.-% und noch bevorzugter 90 bis 99 Gew.-% Laurinfett umfasst.

5. Belüftete Fettemulsion nach einem der vorhergehenden Ansprüche, wobei das Laurinfett der Fettzusammensetzung 40 bis 60 Gew.-%, vorzugsweise 42 bis 58 Gew.-% Laurinsäure (C12:0) umfasst.

6. Belüftete Fettemulsion nach einem der vorhergehenden Ansprüche, wobei das Laurinfett der Fettzusammensetzung ausgewählt ist aus Kokosnussöl, Palmkernöl, vollständig hydriertem Kokosnussöl, vollständig hydriertem Palmkernöl, Fraktionen davon und Mischungen davon, und wobei das Laurinfett vorzugsweise aus Kokosnussöl besteht.

7. Belüftete Fettemulsion nach einem der vorhergehenden Ansprüche, wobei die Fettzusammensetzung 1 bis 20 Gew.-%, vorzugsweise 1 bis 15 Gew.-% des umgeesterten Fetts umfasst.

8. Belüftete Fettemulsion nach einem der vorangehenden Ansprüche, wobei das umgeesterte Fett der Fettzusammensetzung 35 bis 68 Gew.-%, vorzugsweise von 40 % bis 65 % der gesamten Stearinsäure (C18:0) und Arachinsäure (C20:0); 1 bis 9 Gew.-%, vorzugsweise 1 bis 8 % Palmitinsäure (C16:0); und 0,0 bis 1,5 Gew.-%, vorzugsweise 0,1 bis 1,0 % Laurinsäure (C12:0) umfasst.

9. Belüftete Fettemulsion nach einem der vorhergehenden Ansprüche, wobei das umgeesterte Fett der Fettzusammensetzung bezogen auf die gesamten in der Zusammensetzung vorhandenen Triglyceride 7 bis 30 Gew.-% der kombinierten Mengen an StStSt- und AStSt-Triglyceriden, wobei St Stearinsäure und A Arachinsäure ist, vorzugsweise 8 bis 28 Gew.-% umfasst.

10. Belüftete Fettemulsion nach einem der vorhergehenden Ansprüche, wobei das umgeesterte Fett der Fettzusammensetzung ein Gewichtsverhältnis von StOSt:StOO von weniger als 2,5, vorzugsweise von 0,5 bis 2,3 aufweist, wobei St Stearinsäure und O Ölsäure ist.

11. Belüftete Fettemulsion nach einem der vorhergehenden Ansprüche, wobei das umgeesterte Fett der Fettzusammensetzung Folgendes aufweist:
gemessen an unstabilisiertem Fett gemäß ISO 8292-1;
45,0 bis 68,0, vorzugsweise 48,0 bis 67,5 Festfettgehalt bei 10°C; und/oder
15,0 bis 70,0, vorzugsweise 20,0 bis 65,0 Festfettgehalt bei 25°C; und/oder
15,0 bis 59,0, vorzugsweise 20,0 bis 55,0 Festfettgehalt bei 30°C; und/oder
10,0 bis 55,0, vorzugsweise 15,0 bis 50,0 Festfettgehalt bei 35°C; und/oder
5,0 bis 45,0, vorzugsweise 10,0 bis 40,0 Festfettgehalt bei 40°C.

12. Belüftete Fettemulsion nach einem der vorhergehenden Ansprüche, wobei das umgeesterte Fett der Fettzusammensetzung ausgewählt ist aus umgeesterter Sheabutter, umgeestertem Shea-Stearin, umgeesterter Salbutter, umgeestertem Sal-Stearin, umgeesterter Kokumbutter, umgeestertem Kokumbutter-Stearin, umgeesterter Kakaobutter, umgeestertem Kakaobutter-Stearin und Mischungen davon, vorzugsweise umgeesterter Salzbutter, umgeestertem Shea-Stearin und Mischungen davon.

13. Belüftete Fettemulsion nach einem der vorhergehenden Ansprüche, umfassend:
35 bis 65 Gew.-%, vorzugsweise 40 bis 55 Gew.-% Wasser;
20 bis 55 Gew.-%, vorzugsweise 25 bis 50 Gew.-% der Fettzusammensetzung; und
5 bis 25 Gew.-%, vorzugsweise 10 bis 20 Gew.-% Zucker.

14. Belüftete Fettemulsion nach einem der vorhergehenden Ansprüche, bei der es sich um Schlagsahne handelt.

15. Verfahren zur Herstellung einer belüfteten Fettemulsion, umfassend die folgenden Schritte:
a) Bereitstellen einer Mischung, die 10 bis 90 Gew.-% Wasser und 10 bis 90 Gew.-% einer Fettzusammensetzung umfasst, wobei die Fettzusammensetzung Folgendes umfasst: 75 bis 99 Gew.-% eines Laurinfetts, das 35 bis 65 % Laurinsäure (C12:0) umfasst; und 1 bis 25 Gew.-% eines umgeesterten Fetts, das 30 bis 70 Gew.-% Gesamtstearinsäure (C18:0) und Arachinsäure (C20:0) umfasst; 1 bis 10 Gew.-% Palmitinsäure (C16:0) und weniger als 2 Gew.-% Laurinsäure (C12:0); wobei sich die Prozentsätze der Säuren auf Säuren beziehen, die als Acylgruppen in Glyceriden im Fett gebunden sind, und auf dem Gesamtgewicht der C8- bis C24-Fettsäuren basieren; und basierend auf den gesamten in der Zusammensetzung vorhandenen Triglyceriden 5 bis 35 Gew.-% der kombinierten Mengen an StStSt- und AStSt-Triglyceriden, wobei St Stearinsäure und A Arachinsäure ist;
b) Pasteurisieren und Homogenisieren der in Schritt a) erhaltenen Mischung;
c) Stabilisieren der in Schritt b) erhaltenen pasteurisierten und homogenisierten Mischung, vorzugsweise für mindestens 6 Stunden bei 3°C bis 7°C, besonders bevorzugt für 8 bis 24 Stunden; und
d) Belüften der in Schritt c) erhaltenen stabilisierten Mischung.

16. Verwendung einer belüfteten Fettemulsion nach einem der Ansprüche 1 bis 14 in einem Süßwarenprodukt oder Backwarenprodukt.

17. Süßwarenprodukt oder Backwarenprodukt, umfassend eine belüftete Fettemulsion nach einem der Ansprüche 1 bis 14.

## Revendications

1. Émulsion grasse aérée comprenant :
- de 10 % à 90 % en poids d'eau ; et
- de 10 % à 90 % en poids d'une composition grasse, dans laquelle la composition grasse comprend :
de 75 % à 99 % en poids d'une graisse laurique comprenant de 35 % à 65 % en poids d'acide laurique (C12:0), ledit pourcentage se référant à l'acide laurique lié sous forme de groupes acyle dans les glycérides de la graisse et étant basé sur le poids total d'acides gras en C8 à C24 ; et
de 1 % à 25 % en poids d'une graisse interestérifiée comprenant de 30 % à 70 % en poids d'acide stéarique total (C18:0) et d'acide arachidique (C20:0) ; de 1 % à 10 % en poids d'acide palmitique (C16:0) et moins de 2 % en poids d'acide laurique (C12:0) ; lesdits pourcentages d'acides se référant aux acides liés sous forme de groupes acyle dans les glycérides de la graisse et étant basés sur le poids total des acides gras en C8 à C24 ; et de 5 % à 35 % en poids des quantités combinées de triglycérides StStSt et AStSt sur la base des triglycérides totaux présents dans la composition, dans laquelle St est l'acide stéarique et A est l'acide arachidique.

2. Émulsion grasse aérée selon la revendication 1, ayant un excédent de 100 % à 400 %, de préférence de 150 % à 300 %.

3. Émulsion grasse aérée selon la revendication 1 ou la revendication 2, comprenant :
de 20 % à 80 % en poids d'eau, de préférence de 30 % à 70 % en poids ; et
de 10 % à 70 % en poids de la composition grasse, de préférence de 15 % à 65 % en poids.

4. Émulsion grasse aérée selon l'une quelconque des revendications précédentes, dans laquelle la composition grasse comprend de 80 % à 99 % en poids de graisse laurique, de préférence de 85 % à 99 % en poids et plus préférablement de 90 % à 99 % en poids.

5. Émulsion grasse aérée selon l'une quelconque des revendications précédentes, dans laquelle la graisse laurique de la composition grasse comprend de 40 % à 60 % en poids d'acide laurique (C12:0), de préférence de 42 % à 58 % en poids.

6. Émulsion grasse aérée selon l'une quelconque des revendications précédentes, dans laquelle la graisse laurique de la composition grasse est choisie parmi l'huile de coco, l'huile de palmiste, l'huile de coco entièrement hydrogénée, l'huile de palmiste entièrement hydrogénée, leurs fractions et leurs mélanges, et dans laquelle de préférence la graisse laurique est constituée d'huile de coco.

7. Émulsion grasse aérée selon l'une quelconque des revendications précédentes, dans laquelle la composition grasse comprend de 1 % à 20 % en poids de graisse interestérifiée, de préférence de 1 % à 15 % en poids.

8. Émulsion grasse aérée selon l'une quelconque des revendications précédentes, dans laquelle la graisse interestérifiée de la composition grasse comprend de 35 % à 68 % en poids d'acide stéarique total (C18:0) et d'acide arachidique (C20:0), de préférence de 40 % à 65 % ; de 1 % à 9 % en poids d'acide palmitique (C16:0), de préférence de 1 % à 8 % ; et de 0,0 % à 1,5 % en poids d'acide laurique (C12:0), de préférence de 0,1 % à 1,0 %.

9. Émulsion grasse aérée selon l'une quelconque des revendications précédentes, dans laquelle la graisse interestérifiée de la composition grasse comprend de 7 % à 30 % en poids des quantités combinées de triglycérides StStSt et AStSt sur la base des triglycérides totaux présents dans la composition, dans laquelle St est l'acide stéarique et A est l'acide arachidique, de préférence de 8 % à 28 % en poids.

10. Émulsion grasse aérée selon l'une quelconque des revendications précédentes, dans laquelle la graisse interestérifiée de la composition grasse a un rapport pondéral StOSt:StOO inférieur à 2,5, de préférence de 0,5 à 2, 3, dans laquelle St est l'acide stéarique et O est l'acide oléique.

11. Émulsion grasse aérée selon l'une quelconque des revendications précédentes, dans laquelle la graisse interestérifiée de la composition grasse a :
de 45,0 à 68,0 teneur en matières grasses solides à 10°C, de préférence de 48,0 à 67,5 ; et/ou
de 15,0 à 70,0 teneur en matières grasses solides à 25°C, de préférence de 20,0 à 65,0 ; et/ou
de 15,0 à 59,0 teneur en matières grasses solides à 30°C, de préférence de 20,0 à 55,0 ; et/ou
de 10,0 à 55,0 teneur en matières grasses solides à 35°C, de préférence de 15,0 à 50,0 ; et/ou
de 5,0 à 45,0 teneur en matières grasses solides à 40°C, de préférence de 10,0 à 40,0 ;
mesuré sur graisse non stabilisée selon la norme ISO 8292-1.

12. Émulsion grasse aérée selon l'une quelconque des revendications précédentes, dans laquelle la graisse interestérifiée de la composition grasse est choisie parmi le beurre de karité interestérifié, la stéarine de karité interestérifiée, le beurre de sel interestérifié, la stéarine de sel interestérifié, le beurre de kokum interestérifié, la stéarine de beurre de kokum interestérifié, le beurre de cacao interestérifié, la stéarine de beurre de cacao interestérifié et leurs mélanges, de préférence le beurre de sel interestérifié, la stéarine de karité interestérifiée et leurs mélanges.

13. Émulsion grasse aérée selon l'une quelconque des revendications précédentes, comprenant :
de 35 % à 65 % en poids d'eau, de préférence de 40 % à 55 % en poids ;
de 20 % à 55 % en poids de la composition grasse, de préférence de 25 % à 50 % en poids ; et
de 5 % à 25 % en poids de sucre, de préférence de 10 % à 20 % en poids.

14. Émulsion grasse aérée selon l'une quelconque des revendications précédentes, qui est de la crème fouettée.

15. Procédé de préparation d'une émulsion grasse aérée comprenant les étapes suivantes :
a) la fourniture d'un mélange comprenant de 10 % à 90 % en poids d'eau et de 10 % à 90 % en poids d'une composition grasse, dans lequel la composition grasse comprend : de 75 % à 99 % en poids d'une graisse laurique comprenant de 35 % à 65 % d'acide laurique (C12:0) ; et de 1 % à 25 % en poids d'une graisse interestérifiée comprenant de 30 % à 70 % en poids d'acide stéarique total (C18:0) et d'acide arachidique (C20:0) ; de 1 % à 10 % en poids d'acide palmitique (C16:0) et moins de 2 % en poids d'acide laurique (C12:0) ; lesdits pourcentages d'acides se référant aux acides liés sous forme de groupes acyle dans les glycérides de la graisse et étant basés sur le poids total des acides gras en C8 à C24 ; et de 5 % à 35 % en poids des quantités combinées de triglycérides StStSt et AStSt, sur la base des triglycérides totaux présents dans la composition, dans lequel St est l'acide stéarique et A est l'acide arachidique ;
b) la pasteurisation et l'homogénéisation du mélange obtenu à l'étape a) ;
c) la stabilisation du mélange pasteurisé et homogénéisé obtenu à l'étape b), de préférence pendant au moins 6 heures entre 3°C et 7°C, plus préférablement pendant 8 à 24 heures ; et
d) le fait d'aérer le mélange stabilisé obtenu à l'étape c).

16. Utilisation d'une émulsion grasse aérée selon l'une quelconque des revendications 1 à 14 dans un produit de confiserie ou un produit de boulangerie.

17. Produit de confiserie ou produit de boulangerie comprenant une émulsion grasse aérée selon l'une quelconque des revendications 1 à 14.
